(19) Europäisches Patentamt
European Patent Office
Office européen des brevets

(11) EP 1 179 363 A2

(12) EUROPEAN PATENT APPLICATION

(43) Date of publication:
13.02.2002 Bulletin 2002/07

(51) Int Cl.[7]: **B01J 19/00**, C12Q 1/68

(21) Application number: **01118784.6**

(22) Date of filing: **09.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **09.08.2000 JP 2000241773**
**29.05.2001 JP 2001161199**

(71) Applicant: **FUJI PHOTO FILM CO., LTD.**
**Kanagawa-ken, 250-0123 (JP)**

(72) Inventors:
- **Iwaki, Yoshihide**
  **Asaka-shi, Saitama 351-8585 (JP)**
- **Makino, Yoshihiko**
  **Asaka-shi, Saitama 351-8585 (JP)**
- **Shinoki, Hiroshi**
  **Asaka-shi, Saitama 351-8585 (JP)**
- **Kuhara, Satoru**
  **Fukuoka-shi, Fukuoka 811-1355 (JP)**
- **Tashiro, Kosuke**
  **Fukuoka-shi, Fukuoka 813-0043 (JP)**
- **Muta, Shigeru**
  **Fukuoka-shi, Fukuoka 812-0063 (JP)**

(74) Representative: **Albrecht, Thomas, Dr. et al**
**Kraus & Weisert, Thomas-Wimmer-Ring 15**
**80539 München (DE)**

Remarks:
The sequence listing, which is published as annex to the application documents, was filed after the date of filing. The applicant has declared that it does not include matter which goes beyond the content of the application as filed.

(54) **Fixation of nucleotide derivatives to solid carrier**

(57) A micro-array for analysis of DNA is prepared by the steps of spotting onto a solid carrier in its predetermined area in which plural reactive groups are fixed an aqueous solution which contains a thickening agent and probe molecules (e.g., DNA fragments) having a group reactive with the reactive group of the solid carrier to produce covalent bonding; spotting onto the solid carrier in a different area having the same reactive groups an aqueous solution (same or different); incubating the aqueous solution-spotted solid carrier to produce the covalent bondings; and washing the solid carrier with an aqueous medium to remove the thickening agent from the solid carrier. An electrostatic bonding can be utilized in place of the covalent bonding.

FIG. 1

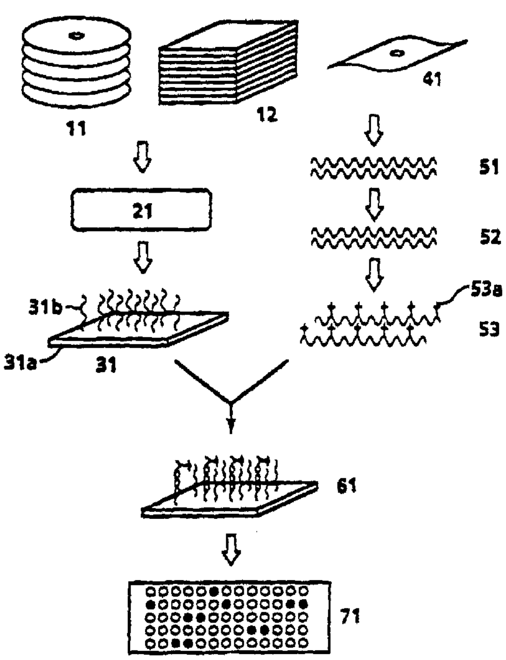




Printed by Jouve, 75001 PARIS (FR)

Annex to the application documents - subsequently filed sequences listing

SEQUENCE LISTING

<110> FUJI PHOTO FILM CO., LTD.

<120> FIXATION OF NUCLEOTIDE DERIVATIVES TO SOLID CARRIER

<130> 11831

<140> EP 01 118 784.6
<141> 2001-08-09

<150> JP 2000-241773
<151> 2000-08-09

<150> JP 2001-161199
<151> 2001-05-29

<160> 2

<170> PatentIn Ver. 2.1

<210> 1
<211> 40
<212> DNA
<213> Artificial Sequence

<220>
<223> Description of Artificial Sequence: PROBE MOLECULE

<400> 1
ctagtctgtg aagtgtctga tcctccccgg acatggagga 40

<210> 2
<211> 40
<212> DNA
<213> Artificial Sequence

<220>
<223> Description of Artificial Sequence: PROBE MOLECULE

<400> 2
tcctccatgt ccggggagga tctgacactt caaggtctag 40

## Description

FIELD OF THE INVENTION

This invention relates to a micro-array for analysis of DNA which is favorably employable, for example, for analysis of expression, mutation and polymorphism of gene.

BACKGROUND OF THE INVENTION

Gene structures of various living bodies as well as the functions of genes in genome scale have been widely studied. Accordingly, new technology for analyzing the gene functions has been rapidly developed.

A DNA micro-array (i.e., DNA chip) which is composed of a solid carrier (i.e., substrate) and a great number of spots of probe molecules such as DNA fragments or oligonucleotide molecules which are aligned and fixed on the solid carrier in separated areas is generally employed not only for base sequencing of a nucleic acid but also analyzing expression, mutation and polymorphism of gene. The analytical data of genetic information are favorably employable also for the study of pharmacologically active substances and further for diagnosis and prevention of diseases.

In the procedure for detection of a nucleic acid such as DNA fragment using the DNA micro-array, a nucleic acid sample (i.e., target nucleic acid) which is equipped with a radioisotope (RI) label or a fluorescent label is brought into contact with the probe molecules in the spots of the micro-array. If the target nucleic acid is complementary to the probe molecules in a certain base sequence, the target nucleic acid is combined with the probe molecules by hybridization. Thus hybridized target nucleic acid is detected by sensing its radioisotope label or fluorescent label. The results of the detection are then imagewise analyzed. The analytical procedure using the DNA micro-array can give a great number of data on the target nucleic acid simultaneously employing an extremely small amount of the target nucleic acid.

A DNA micro-array is prepared generally by synthesizing probe molecules (such as oligonucleotides) on a solid carrier (which is called "on-chip method") or by fixing onto a solid carrier a number of previously prepared DNA fragments or oligonucleotides. The former on-chip method is performed by synthesizing a number of oligonucleotides by combinatrial synthesis in each of extremely small areas predetermined on the solid carrier (Foder, S.P.A. et al, Science, 251, 767-773(1991)). In the synthetic procedure, photo-lithography and solid synthesis technology are utilized and a protective group is selectively removed by irradiation of light.

In the latter method, the previously prepared probe molecules such as DNA fragments or oligonucleotides are spotted on a solid carrier in each of the predetermined small areas and fixed onto the carrier by covalent bonding or ionic bonding (i.e., electrostatic bonding). The bonding is generally produced in the manner described below.

(1) In the case that the probe molecule is a DNA fragment such as cDNA fragment (i.e., complementary DNA fragment which is synthesized using mRNA as template) or a PCR product (i.e., DNA fragment produced from cDNA by multiplication procedure), an aqueous solution of the DNA fragments is spotted on a solid carrier having a coat of a polycation compound (such as poly-lysine or polyethyleneimine) by means of a spotting device of a micro-array preparing apparatus so that the DNA fragments can be electrostatically fixed onto the solid carrier utilizing electric charge of each DNA fragment (Schena, M. et al., Science, 270, 467-470 (1995)).

(2) In the case that the probe molecule is a synthesized oligonucleotide, a reactive group is previously incorporated into the oligonucleotide. The oligonucleotide having the reactive group is then brought into contact with a solid carrier which has a reactive group on its surface in an aqueous medium using a spotting means so that the desired covalent bonding is produced between the reactive group of the oligonucleotide and the reactive group of the solid carrier (Protein Nucleic Acid Enzyme, vol. 43, No. 13, 2004-2011 (1998); Lamture, J.B. et al., Nucl. Acids Res., 22, 2121-2125(1994); Guo, Z. et al., Nucl. Acids Res., 22, 5456-5665(1994)). Examples of the reactive groups to be incorporated into the oligonucleotide include amino, aldehyde, mercapto (-SH), and biotin. On the surface of the solid carrier, a silane coupling agent having amino, aldehyde, epoxy, or the like is coated to incorporate the reactive group onto the surface. The fixation of oligonucleotide by covalent bonding is advantageous because it can produce bonding which is highly stable, as compared with the electrostatic bonding.

(3) In the case that the probe molecule is PNA (i.e., Peptide Nucleic Acid), a reactive group is previously incorporated into the probe PNA in the same manner as in the case (2) as above using the oligonucleotide.

The spotting of an aqueous solution of DNA fragments or other probe molecules onto a solid carrier is performed by means of a known spotting device. Generally employed are a pin method in which the aqueous solution is spotted by means of a pin which is brought into contact with the surface of the solid carrier and an ink jet method using an ink jet printing system. In any methods, it is required that plural spots of the aqueous solution are essentially identical to each other in their shapes and sizes so as to assure accuracy of the resulting analytical data.

Unites States Patent No. 5,837,196 teaches that probe molecules such as nucleic acids are fixed onto a solid carrier using an aqueous solution of matrix polymer such as nitrocellulose. The matrix polymer is then kept on the solid carrier after the probe molecules are fixed, so that the matrix polymer serves as adhesive to retain the probe molecules on the carrier.

The inventors of the present invention have made study on the fixation of probe molecules such as DNA fragments onto a solid carrier using a hydrophilic polymer and noted that target DNA fragment samples show high affinity to the hydrophilic polymer which serves as adhesive for stably keeping the probe molecules on the solid carrier. Accordingly, in the hybridization procedure, labelled non-complementary DNA fragments are non-specifically attached to the DNA micro-array. Since not only the hybridized complementary target DNA fragments having label but also the non-specifically attached labeled non-complementary DNA fragments emit the signals, the signal emitted by label of the non-specifically attached non-complementary DNA fragments forms noise to disturb accurate detection of the desired signal emitted by label of the hybridized complementary target DNA fragments.

## SUMMARY OF THE INVENTION

It is an object of the present invention to provide a process for preparing a micro-array for analysis of DNA or DNA fragment, which gives high detection accuracy and low detection error.

The present inventors have discovered that an aqueous solution which contains probe molecules such as DNA fragments and a water soluble thickening agent in such an amount that the aqueous solution has an increased viscosity forms on a solid carrier a spot of probe molecules which has a desired size and form with good reproducibility. The inventors have further discovered that most of the probe molecules fixed onto the solid carrier in the form of desired spot are retained on the solid carrier even after the solid carrier is washed for removing the thickening agent, particularly, when the probe molecules are fixed onto the solid carrier by covalent bonding. Accordingly, the DNA micro-array which is prepared by the steps of spotting an aqueous solution which contains probe molecules having a reactive group and a water soluble thickening agent onto a solid carrier having on a surface thereof functional groups which are reactive with the reactive group of the probe, incubating the probe molecule-spotted solid carrier for fixing the probe molecules onto the carrier by covalent bonding, and removing the spotted thickening agent gives high detection accuracy and low detection error in the analytical procedure utilizing hybridization between the probe molecules and a target DNA fragment sample.

It is further observed that an electrostatic bonding can be utilized in place of the covalent bonding, even though the stability of the fixed probe molecules on the solid carrier is lower than that of the covalently fixed probe molecules.

Therefore, the present invention resides in a process for preparing a micro-array for analysis of DNA which comprises the steps of:

spotting onto a solid carrier in its predetermined area in which a number of reactive groups are fixed an aqueous solution which contains a thickening agent and probe molecules having a group reactive with the reactive group of the carrier to produce covalent bonding, the thickening agent being incorporated in an amount to increase viscosity of the solution to a predetermined value and the probe molecules being selected from the group consisting of nucleic acid fragments, oligonucleotides and peptide nucleic acids;

spotting onto the solid carrier in an area other than the area in which the aqueous solution was spotted and in which the same reactive groups are present an aqueous solution which contains a thickening agent and probe molecules having a group reactive with the reactive group of the carrier to produce covalent bonding, the thickening agent being incorporated in an amount to increase viscosity of the solution to a predetermined value and the probe molecules being selected from the group consisting of nucleic acid fragments, oligonucleotides and peptide nucleic acids;

incubating the solid carrier having the spotted aqueous solutions on the surface to cause reaction for producing the covalent bondings; and

washing the surface of the solid carrier with an aqueous medium to remove the thickening agent from the surface of the solid carrier.

The present invention further resides in a process for preparing a micro-array for analysis of DNA which comprises the steps of:

spotting onto a solid carrier in its predetermined area in which a number of groups electrically chargeable in an aqueous medium are fixed an aqueous solution which contains a thickening agent and probe molecules having a group electrically chargeable in an aqueous medium to produce electrostatic bonding with the electrically chargeable groups of the carrier, the thickening agent being incorporated in an amount to increase viscosity of the solution to a predetermined value and the probe molecules being selected from the group consisting of nucleic acid fragments, oligonucleotides and peptide nucleic acids;
spotting onto the solid carrier in an area other than the area in which the aqueous solution was spotted and in which the same electrically chargeable groups are present an aqueous solution which contains a thickening agent and probe molecules having a group electrically chargeable in an aqueous medium to produce electrostatic bonding with the electrically chargeable groups of the carrier, the thickening agent being incorporated in an amount to increase viscosity of the solution to a predetermined value and the probe molecules being selected from the group consisting of nucleic acid fragments, oligonucleotides and peptide nucleic acids;
incubating the solid carrier having the spotted aqueous solutions on the surface to cause reaction for producing the covalent bondings;
and
washing the surface of the solid carrier with an aqueous medium to remove the thickening agent from the surface of the solid carrier.

In the invention, the following embodiments are preferred:

(1) Each of the aqueous solutions to be spotted onto the solid carrier has a viscosity of 2 to 50 mPa·s.
(2) The thickening agent is a water-soluble polymer.
(3) The reactive group of the solid carrier is a vinylsulfonyl group and the reactive group of the probe molecule is an amino group.
(4) The vinylsulfonyl group is provided to the solid carrier by reacting a divinylsulfone compound with a amino group which has been previously placed on the solid carrier.
(5) The electrically chargeable group of the solid carrier is an amino group and the electrically chargeable group of the probe molecule is a phosphoric acid group.
(6) The amino group is provided to the solid carrier by treating the solid carrier with an aminosilane coupling agent or a polycation compound.
(7) The aqueous medium for washing the solid carrier contains a surface active agent.
(8) Each of the aqueous solutions has a viscosity essentially identical to each other.
(9) Coefficient of Variation (CV) of the spots formed by the spotting the aqueous solutions is not higher than 6.5%. The CV value means a coefficient of variation obtained by measuring fluorescence strengths in plural spots formed on the solid carrier. In more detail, the CV can be determined by spotting the aqueous solution(s) containing probe molecules labeled with fluorescent agent Cy (optionally and a water soluble thickening agent) on a solid carrier in plural separated areas using a spotting means (e.g., spotter "CARTESIAN" available from TECHNOLOGIES CORP.), incubating the spotted solid carrier for fixing the probe molecules onto the carrier, and measuring the fluorescence strengths in each of the spotted areas of the solid carrier using a fluorescence scanning apparatus, and calculating an average value of the measured fluorescence strengths to obtain a standard deviation (SD, in terms of %) of each measured value.

The DNA micro-array prepared by the process of the invention is advantageously employed in the detection of complementary DNA fragments by the steps of spotting an aqueous solution which contains a target DNA fragment sample having a fluorescent or radioisotope label on the DNA micro-array, incubating the sample-spotted micro-array for performing hybridization between the probe molecules and complementary DNA fragments in the sample solution; and detecting strengths of fluorescent or radioisotope label on the micro-array at each spotted area in which the probe molecules are previously fixed.

## BRIEF DESCRIPTION OF DRAWINGS

Fig. 1 schematically illustrates a representative process of preparing a DNA micro-array and a representative process of detecting complementary DNA fragments by hybridization using the DNA micro-array.
Fig. 2 schematically illustrates the DNA micro-array on which complementary DNA fragments are fixed by hybridization.

## DETAILED DESCRIPTION OF THE INVENTION

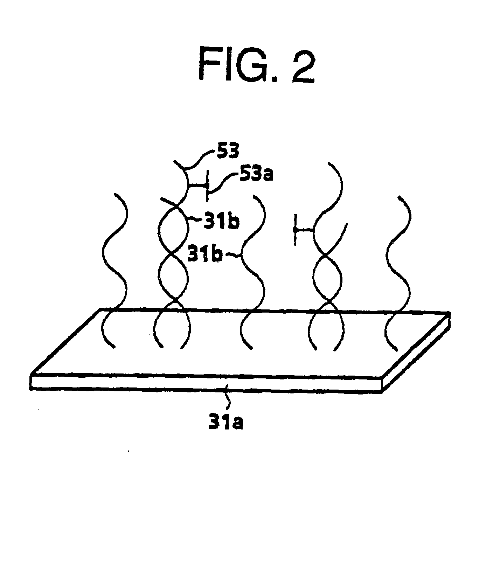

In Fig. 1, a process of preparing a DNA micro-array and a process of detecting complementary DNA fragments by hybridization using the DNA micro-array are schematically illustrated. This figure is incorporated herein by copying from the aforementioned "Protein · Nucleic Acid · Enzyme" vol. 43, No. 13, 2004-2011 (1998).
The process of the invention is described below in more detail, utilizing the schematically illustrated steps of Fig. 1 and Fig. 2.

In the preparation of a DNA micro-array, DNA collection (e.g., cDNA, EST, oligonucleotide) 21 is prepared from a data base 11 in which genome, cDNA, EST (i.e., DNA fragment of 200 - 300 bp (base pair) from 3'-terminal) or the like is registered or from a clone collection 12 by PCR multiplication or chemical synthesis. The DNA collection 21 is then dissolved or dispersed in an aqueous medium in combination with a water-soluble thickening agent to give an aqueous solution having an increased viscosity. Thus viscosity-increased aqueous solution is spotted onto a solid carrier 31a by means of a spotting device. Subsequently, the solid carrier having the spotted aqueous solution on its surface is incubated for fixing the DNA collection 21 onto the solid carrier.

In the process of the invention, the solid carrier is subsequently washed with water so that the thickening agent can be removed from the carrier. Thus, a micro-array 31 having probe molecules 31b which is employed for analysis of DNA fragments is prepared according to the invention.

Before the analysis, mRNA or genome DNA 51 is taken out from a specimen (e.g., cell or tissue) 41, and a target DNA fragment (or cDNA) 52 is prepared using the mRNA or genome DNA 51. The target DNA fragment 52 is labeled with a fluorescent substance 53a to give a labeled DNA fragment (or labeled RNA fragment) 53. The target DNA fragment 53 is brought into contact with the probe molecules 31b of the micro-array 31 for performing hybridization between them. The micro-array having hybridized molecules 61 on its surface is then scanned with a fluorescence measuring apparatus to measure fluorescence strength in each spot. Thus, image data 71 on the spots of hybridized molecules are obtained.

From the image data 71, base sequence of the target DNA fragment is obtained, or gene expression profile is prepared. Further, more complicated analysis on mutation or polymorphism can be done using a data analysis computer program or other data base.

[Solid Carrier and Probe Molecules]

The solid carrier can be any of known solid carriers or their equivalent materials, for instance, a glass plate, a ceramic plate, a resin plate, a metal plate, a glass plate covered with polymer coat, a glass plate covered with metal coat, and a resin plate covered with metal coat. The solid carrier may have a porous structure.

In order to fix probe molecules onto the solid carrier by covalent bonding, the solid carrier should have a plurality of reactive groups on its surface. The reactive groups are provided to the solid carrier, for instance, by coating its surface with a poly-cationic compound (e.g., poly-L-lysine, polyethyleneimine, or polyalkylimine). The poly-L-lysine coat is preferred. Otherwise, the surface of the solid carrier can be treated with a silane-coupling agent containing a reactive group (e.g., amino, aldehyde, epoxy, or mercapto), so that the reactive group is provided to the surface of the solid carrier.

The reactive group preferably is amino, aldehyde, epoxy, or carboxyl. Particularly preferred is an amino group. When the silane-coupling agent is employed, the silane-coupling agent is fixed onto the surface of the solid carrier via covalent bonding. When the amine group-containing polymer is employed, the polymer is fixed onto the surface of the solid carrier by electrostatic bonding. The covalent-bonding is preferred from the viewpoint of stable and reliable fixation.

Examples of the silane-coupling agents include γ-aminopropyltriethoxysilane, N-β(aminoethyl)-γ-aminopropyltrimethoxysilane, and N-β(aminoethyl)-γ-aminopropylmethyldimethoxysilane. Most preferred is γ-aminopropyltriethoxysilane.

A combination of processing a solid carrier with a silane-coupling agent in combination with coating with a poly-cation is also employable.

The probe molecules such as DNA fragments or synthetic oligonucleotides are then fixed on the surface of the solid carrier by covalent bonding. The procedure for fixing the probe molecules onto the solid carrier is performed by bringing an aqueous solution of the probe molecules into contact with the surface of the solid carrier.

For fixation of the probe molecules onto the solid carrier by covalent bonding, the probe molecules preferably have a functional group which is reactive with the reactive group attached to the surface of the solid carrier.

More preferably, the probe molecules having a reactive group is combined with the reactive groups of the solid carrier using a linking chain which can be produced using a divinylsulfone compound. The divinylsulfone compound preferably has the following formula:

$$X^1 - SO_2 - L - SO_2 - X^2$$

in which each of $X^1$ and $X^2$ is a vinyl group and L is a linking group.

Otherwise, the linking chain can be made of an alkylene group such as hexylene group or an N-alkylaminoalkylene group such as N-methylamino-hexylene group.

The probe molecule may be a peptide nucleic acid (i.e., PNA) which can be produced by changing the phospho-diester bonding of DNA with a peptide bonding.

In the process of the invention, the probe molecules can be fixed onto the solid carrier by electrostatic bonding. The fixation of probe molecules onto a solid carrier per se is already known. For instance, a glass sheet is treated by an aminosilane coupling agent or coated with a polycation compound (e.g., poly-lysine or polyethyleneimine) so that a cationic group is fixed onto the glass sheet. Thus treated glass sheet is brought into contact with a DNA fragment having an anionic group such as a phosphoric acid group (or phosphate group) or a synthesized oligonucleotide or PNA into which an appropriate anionic group is introduced, so that an electrostatic bonding can be formed between the solid carrier and the probe molecules.

[Water-Soluble Thickening Agent]

In the procedure for fixing the probe molecules onto a surface of a solid carrier according to the invention, a water-soluble thickening agent (i.e., thickener) is employed. Examples of the thickening agents include water-soluble synthetic or natural polymers, polyhydric alcohols such as glycerol, and saccharides such as trehalose, sodium alginate, and starch.

The water-soluble polymers preferably are cationic, anionic or amphoteric polymers. Nonionic polymers are also employable. Preferred is a cationic polymer. The polymer preferably has a molecular weight in the range of $10^3$ to $10^6$.

The cationic polymer preferably is a quaternary ammonium polymer. Examples of the quaternary ammonium polymers include poly(1,4-diazoniabicyclo[2.2.2]octane-1,4-diylmethylene-1,4-phenylenemethylene chloride), polyvinylbenzyltrimethylammonium chloride, poly(methylenetrimethylammonium chloride acrylate), and poly(ethylenetrimethylammonium chloride acrylate). Tertiary amine polymers such as poly-N-vinylpyrrolidone, polyvinylimidazole, and polyvinylpyrazole are also employed. Most preferred is poly(1,4-diazoniabicyclo[2.2.2]octane-1,4-diylmethylene-1,4-phenylenemethylene chloride) .

The anionic polymer preferably has an anionic group such as $COO^-$, $SO_3^-$, $OSO_3^-$, $PO_3^-$, or $PO_2^-$. Examples of the anionic polymers include carboxymethylcellulose, cellulose sulfate esters, polyacrylic acid, polymethacrylic acid, polyvinylbenzene sulfonate, and their salts. Most preferred are sodium polyacrylate, sodium polyvinylbenzene sulfonate, and carboxymethylcellulose.

The nonionic polymer preferably is polyacrylamide, polyethylene glycol, polyvinyl alcohol, acetal of polyvinyl alcohol, cellulose, hydroxyethylcellulose, hydroxypropylcellulose, or one of other cellulose derivatives. Preferred are polyacrylamide and polyethylene glycol.

The amphoteric polymer preferably is a protein such as albumin, gelatin, gelatin derivative, or casein. Most preferred is albumin.

[Fixation of Probe Molecule onto Solid Carrier]

For the fixation of probe molecules onto the solid carrier, the probe molecules and water-soluble thickening agent are dissolved or dispersed in an aqueous medium such as distilled water or SSC (i.e., Standard Salt-Citrate buffer, or brine and citrate buffer) to prepare an aqueous probe molecule solution for spotting. The aqueous probe molecule solution generally has a viscosity in the range of 1 to 100 mPa·s. When the spotting is done by means of a spotter of quill-pin type, the aqueous solution preferably has a viscosity of 2 to 50 mPa·s, more preferably a viscosity of 2 to 20 mPa·s. If the thickening agent is a water-soluble polymer, the polymer is preferably dissolved in an aqueous medium in an amount of 0.1 to 5 wt.%, more preferably in an amount of 0.3 to 3 wt.%. If the thickening agent is a polyhydric alcohol or saccharide, it is preferably dissolved in an aqueous medium in an amount of 5 to 50 wt.%, more preferably in an amount of 10 to 40 wt.%.

Generally, the aqueous solution is once placed on a plastic plate having 96 or 384 wells, and then spotted onto a solid carrier using a spotting means. The spotting means of pin type in which the aqueous solution can be held is generally employed. The pin holding the solution was then brought into contact with the surface of the solid carrier to transfer the solution onto the solid carrier. The pin may be a solid pin which has no groove on its tip or a quill pin which has a groove on its tip. The quill pin is preferably employed. Other known spotting system such as an ink jet system or a capillary system are also utilizable.

The aqueous solution is spotted onto the solid carrier under the condition that each drop of the solution generally has a volume of 100 pL to 1 μL, preferably 1 to 100 nL. The probe molecules are preferably spotted onto the solid carrier in an amount of $10^2$ to $10^5/cm^2$. In terms of mol. of the probe molecule, 1 to $10^{-15}$ moles are placed in each spot. In terms of weight, several ng or less of probe molecules are placed in each spot. The spotting of the aqueous solution is done onto the solid carrier to form a great number of dots (i.e., spots) having almost the same shape and size. It is important to form these dots to have almost the same shape and size, if the hybridization is to be quantitatively analyzed. Several dots are formed separately from each other with a distance of 1.5 mm or less, preferably 100 to 300 μm. One dot preferably has a diameter of 50 to 300 μm.

The known DNA micro-array has on its surface a great number of dots or spots formed of probe molecules. The probe molecules present in one spot are generally equal to each other. However, the probe molecules present in different spots may be the same or different.
After the aqueous solution is spotted on the solid carrier, the spotted solution is incubated, namely, for keeping the spotted solution for a certain period of time at room temperature or under warming (at 25-50°C and 70%RH or higher), so as to firmly fix the spotted probe molecules onto the carrier surface. In the course of incubation, UV irradiation or surface treatment using sodium borohydride or a Shiff reagent may be applied to the spotted solution. The UV irradiation under heating is preferably adopted. It is assumed that these treatments are effective to strengthen the desired covalent bonding between the surface of the solid carrier and the spotted probe molecules.
The incubated solid carrier is then washed with an aqueous solvent to remove the thickening agent from the surface of the solid carrier. The aqueous solvent employed for the washing preferably contains a surface active agent such as sodium dodecyl sulfate or a buffer composition such as a brine-citrate buffer. The washing is preferably conducted in a warm or hot aqueous solvent so as to remove an essentially whole amount of the thickening agent from the surface of the solid carrier and further wash out free probe molecules which have not been fixed onto the carrier.
The DNA detection micro-array of the invention preferably has a great number of spots or dots (generally, from several hundreds to tens of thousands) in which a great number of probe molecules are fixed to the solid carrier by covalent bonding. The CV which is relative to variation of conditions of the different spots preferably is less than 6.5%.

[Detection of Complementary DNA Fragments]

A target DNA fragment or a sample DNA fragment, which is to be subjected to the analysis concerning the presence of a complementary DNA fragment can be obtained from various origins. In the analysis of gene, the target DNA fragment can be prepared from a cell or tissue of eucaryote. In the analysis of genome, the target DNA fragment can be obtained from tissues other than erythrocyte. In the analysis of mRNA, the target sample is obtained from tissues in which mRNA is expressed. If the DNA micro-array has an oligonucleotide fixed on its solid carrier, the target DNA fragment preferably has a low molecular weight. The target DNA may be multiplied by PCR method.
To the target DNA fragment is attached an RI label or a non-RI label by a known method. The non-RI label is preferably utilized. Examples of the non-RI labels include fluorescence label, biotin label, and chemical luminescence label. The fluorescence label is most preferably employed. Examples of the fluorescence labels include cyanine dyes (e.g., Cy3 and Cy5 belonging to Cy Dye™ series), rhodamine 6G reagent, N-acetoxy-$N^2$-acetylaminofluorene (AAF), and AAIF (iodide derivative of AAF). The target or sample DNA fragments labelled with different fluorescence indicators can be simultaneously analyzed, if the fluorescence indicators have fluorescence spectrum of different peaks. Also employable is an electroconductive label.
The hybridization is performed by spotting an aqueous sample solution containing the target DNA fragments onto the DNA micro-array. The spotting is generally done in an amount of less than several µg, preferably in the range of 1 to 100 nL. The hybridization is carried out by keeping the DNA micro-array having the spotted sample solution thereon at a temperature between room temperature and 70°C, for 6 to 20 hours. After the hybridization is complete, the DNA micro-array is washed with an aqueous buffer solution containing a surface active agent, to remove free (unfixed) sample DNA fragments. The surface active agent preferably is sodium dodecyl sulfate (SDS). The buffer solution may be a citrate buffer solution, a phosphate buffer solution, a borate buffer solution, Tris buffer solution, or Goods buffer solution. The citrate buffer solution is preferably employed.
The hybridization on the DNA micro-array is characteristic in that an extremely small amount of the sample or target DNA fragments can be subjected to the analysis. In order to perform the desired hybridization appropriately, optimum conditions should be determined.
The DNA micro-array having the hybridized DNA fragments on its surface is dried and then subjected to detection of signals of fluorescent label or other label. The fluorescent label is detected by means of a fluorometer. Fluorometers of various types are known. In the fluorometer, the DNA micro-array on which plural spots having the DNA fragments equipped with the fluorescent label are scanned to detect the locations of the target spots (See Fig. 1).
The present invention is further described by the following examples.

[Examples 1 to 3]

(1) Solid carrier having reactive groups
A glass plate (25 mm x 75 mm) was dipped in an aqueous solution of 2 wt.% aminopropylethoxysilane (available from Shin-etsu Chemical Industry Co., Ltd.) for 10 minutes and then taken out. The glass plate was subsequently washed with water and dried to 110°C for 10 minutes, so as to prepare a glass plate having a coat of the aminosilane compound. The coated glass plate was dipped in an aqueous borate buffer solution (pH 8.0) containing 3 wt.% of 1,2-bis(vinysulfonylacetamide)ethane for 2 hours and then taken out from the aqueous solution. The glass plate was washed with water and dried for one hour under pressure, to give a glass plate having on its surface reactive vinylsulfonyl groups.

(2) Fixation of probe molecules

5'-CTAGTCTGTGAAGTGTCTGATCCTCCCCGGACATGGAGGA-3' (oligonucleotide of 40mers) having a fluorescent label (Fluorolink Cy5-dCTP, available from Amasham Pharmacia Biotec Corp.) at 3'-terminal and 5'-terminal (i.e., Cy5-Oligo DNA(+)) was prepared.

Separately, aqueous solutions containing a water-soluble thickening agent (set forth in Table 1) were prepared. In each aqueous solution was dispersed the Cy5-Oligo DNA (+) in an amount of 1 x $10^{-6}$M, to prepare an aqueous Cy5-Oligo DNA(+) solution.

The aqueous solution was spotted on the aforementioned glass plate having reactive vinylsulfonyl groups by means of a commercially available spotting apparatus (of quill pin type, available from CARTESIAN TECHNOLOGIES CORP.). Fifty spots were placed on the glass plate.

The glass plate having on its surface the fifty spots of the aqueous Cy5-Oligo DNA(+) solution was placed in a moisture chamber having an inner temperature of 25°C and a humidity of 70% for 18 hours. The glass plate was then taken out from the moisture chamber and dried at room temperature.

(3) Washing of the glass plate

The glass plate prepared in (2) as above was washed with two portions of a mixture of an aqueous SDS (0.1 wt.%) solution and 2xSSC (Standard Salt-Citrate buffer of brine-citrate buffer) at room temperature, one portion of 0.2xSSC at 50°C, and one portion of distilled water at room temperature, so as to almost completely remove the thickening agent from the glass plate.

The washed glass plate was dried to give a glass plate on which spots of Cy5-Oligo DNA(+) were formed was produced.

(4) Reproducibility and Fixation of probe molecules

The glass plate was scanned by a fluorometer prior to the washing and after the washing for measuring fluorescence strengths in each of the fifty spots.

The measured values were processed to obtain a mean relative value and a standard variations (%). Subsequently, from these values, CV (coefficient of variation, %) was obtained, for evaluating the reproducibility of the formed spots. Further, a mean fluorescence strength was obtained in each measurement (i.e., prior to and after the washing) to determine a relative amount of probe molecule remaining in the spots.

[Comparison Examples 1 and 2]

The procedures of Examples 1 to 3 were repeated except that the spotting of probe molecules was carried out using an aqueous 2xSSC solution or diluted water in place of the aqueous solution containing the thickening agent.

The same evaluations were performed in the manner described in Examples 1 to 3.

The results are set forth in Table 1.

Table 1

| | Spotting Solution (viscosity: mPa·s) | Fluorescence Strength (CV: %) | | |
|---|---|---|---|---|
| | | Prior to washing | After washing | Remaining ratio |
| Ex. 1 | 1 wt.% CMC (8.5) | 43,200 (1.8) | 33,100 (2.0) | 76.6% |
| Ex. 2 | 1 wt.% PAA (12.0) | 45,800 (1.6) | 36,300 (1.9) | 79.3% |
| Ex. 3 | 30 wt.% Treh. (3.5) | 41,000 (2.2) | 30,800 (2.5) | 75.1% |
| Com. 1 | 2 x SSC (1.1) | 38,500 (6.5) | 28,200 (7.0) | 73.2% |
| Com. 2 | distilled water (0.9) | 38,000 (7.3) | 28,300 (7.5) | 74.5% |
| Remarks: CMC: carboxymethylcellulose<br>PAA: polyacrylamide | | | | |

The results set forth in Table 1 indicate that the spotting solutions of Examples 1 to 3 which contain a thickening agent and have an increased viscosity give spots (prior to the washing) showing a CV value which is in the range of 1/2 to 1/3, as compared with the corresponding CV value of the spots given by the use of the conventional spotting solutions of Comparison Examples 1 and 2. This means that the process of the invention is effective for giving well reproducible and satisfactory spots. Further, the spots of covalently bonded probe molecules produced by the use of a thickening agent according to the invention well keep their conditions even after the spots were washed with water.

[Examples 4 to 6]

The procedures of Example 1 to 3 were repeated except that the probe molecules was fixed on the glass plate by electrostatic bonding. In more detail, the Oligo DNA(+) was replaced with an Oligo DNA(-) which has Cy5 only at 5'-terminal, and the fixation was carried out by heating the spotted glass plate to 80°C for one hour and subsequently by irradiating the heated glass plate with UV rays of 120 mV.
The same evaluations were performed in the manner described in Examples 1 to 3.

[Comparison Examples 3 and 4]

The procedures of Reference Examples 1 to 3 were repeated except that the spotting of probe molecules was carried out using an aqueous 2xSSC solution or diluted water in place of the aqueous solution containing the thickening agent.
The same evaluations were performed in the manner described in Examples 1 to 3.
The results are set forth in Table 2.

Table 2

| | Spotting Solution (viscosity: mPa·s) | Fluorescence Strength (CV: %) | | |
|---|---|---|---|---|
| | | Prior to washing | After washing | Remaining ratio |
| Ex. 4 | 1 wt.% CMC (8.5) | 43,200 (1.5) | 9,900 (2.9) | 20.5% |
| Ex.5 | 1 wt.% PAA (12.0) | 50,500 (1.8) | 11,900 (3.1) | 23.6% |
| Ex.6 | 30 wt.% Treh. (3.5) | 45,200 (2.5) | 2,800 (6.2) | 6.2% |
| Com. 3 | 2 x SSC (1.1) | 42,000 (7.4) | 2,600 (9.9) | 6.2% |
| Com. 4 | distilled water (0.9) | 43,500 (6.8) | 2,400 (10.5) | 5.5% |
| Remarks: CMC: carboxymethylcellulose<br>PAA: polyacrylamide | | | | |

The results set forth in Table 2 indicate that the spotting solutions of Examples 4 to 5 which contain a thickening agent and have an increased viscosity give spots (prior to the washing) showing a CV value which is in the range of 1/2 to 1/3, as compared with the corresponding CV value of the spots given by the use of the conventional spotting solutions of Comparison Examples 1 and 2. However, the spots of electrostatically fixed probe molecules produced by the aid of a thickening agent are not well resistant to the washing with water and most are broken by the washing. Nevertheless, the CV values after the washing are still lower than those of Comparison Examples.

[Examples 7 to 9]

(1) Solid carrier having reactive groups
The procedures of (1) of Examples 1 to 3 were repeated to give a glass plate having on its surface reactive vinylsulfonyl groups.
(2) Fixation of probe molecules

5'-TCCTCCATGTCCGGGGAGGATCTGACACTTCAAGGTCTAG-3' (oligonucleotide of 40mers) having an amino group at 5'-terminal (i.e., Oligo DNA(+)) and cDNA of 500 bp having an amino group at 5'-terminal (i.e., cDNA(+)) were both prepared.

Separately, aqueous solutions containing a water-soluble thickening agent (set forth in Table 3) were prepared. In each aqueous solution was dispersed the Oligo DNA(+) or cDNA(+) in an amount of 1 x $10^{-6}$M, to prepare an aqueous solution of Oligo DNA(+) or cDNA(+).

The aqueous solution was spotted on the glass plate having reactive vinylsulfonyl groups by means of a commercially available spotting apparatus. Fifty spots were placed on the glass plate.

The glass plate having on its surface the fifty spots of the aqueous solution of Oligo DNA(+) or cDNA(+) was placed in a moisture chamber having an inner temperature of 25°C and a humidity of 70% for 18 hours. The glass plate was taken out from the moisture chamber, dipped in an aqueous 0.5 M glycine solution (pH 8.5) for one hour, and subsequently dried at room temperature, to prepare a DMA micro-array.

In addition, a negative control was prepared by spotting an aqueous solution containing the thickening agent only (i.e., containing not probe molecules).

(3) Washing (Preparation of DNA micro-array)

The glass plate prepared in (2) as above was dipped in a boiling water for 3 minutes, so as to almost completely remove the thickening agent from the glass plate.

The washed glass plate was subsequently dipped in an ice-chilled ethanol and dried at room temperature to give a DNA micro-array.

(4) Hybridization

A 500 bp DNA fragment sample having a fluorescent label Cy5 at its 5' -terminal which has a base sequence complementary to the Oligo DNA(+) and which is also complementary to the cDNA(+) was prepared.

Thus prepared DNA fragment sample was dispersed in 20 μL of an aqueous solution (mixture of 4xSSC and 10 wt.% of aqueous SDS solution) for hybridization, and heated to 90°C for 3 minutes. The heated solution was then cooled and spotted on the DNA micro-array prepared in (2) as above using a quill pin spotting device. The surface of the micro-array was covered with a cover glass (for microscopy) and the micro-array was placed in a moisture chamber and incubated at 60°C for 20 hours. The incubated micro-array was then washed with two portions of a mixture of an aqueous SDS (0.1 wt.%) solution and 2xSSC at room temperature, one portion of 0.2xSSC at 50°C, and one portion of distilled water at room temperature, so as to almost completely remove the thickening agent from the glass plate.

The washed DNA micro-array was centrifuged at 600 r.p.m. for 20 seconds for removing water and dried at room temperature.

(5) Reproducibility and Detection of DNA fragment

The glass plate was scanned by a fluorometer for measuring fluorescence strengths in each of the fifty spots.

The measured values were processed to obtain a mean relative value and a standard variations (%). Subsequently, from these values, CV (%) was obtained, for evaluating the reproducibility of the formed spots.

[Comparison Examples 5 and 6]

The procedures of Examples 4 to 6 were repeated except that the spotting of probe molecules was carried out using an aqueous 2xSSC solution or diluted water in place of the aqueous solution containing the thickening agent.
The same evaluations were performed in the manner described in Examples 1 to 3.
The results are set forth in Table 3.

Table 3

| | Spotting Solution (viscosity: mPa·s) | Fluorescence Strength (CV: %) | | |
|---|---|---|---|---|
| | | Fixing of Oligo DNA(+) | Fixing of cDNA(+) | Negative Control |
| Ex. 7 | 1 wt.% CMC (8.5) | 18,600 (2.5) | 24,600 (2.4) | 0 |
| Ex. 8 | 1 wt.% PAA (12.0) | 20,200 (2.7) | 26,600 (2.1) | 0 |
| Ex. 9 | 30 wt.% Treh. (3.5) | 16,700 (3.5) | 23,100 (3.2) | 0 |
| Com 5 | 2 x SSC | 15,500 | 22,200 | 0 |

Table 3 (continued)

| | Spotting Solution (viscosity: mPa·s) | Fluorescence Strength (CV: %) | | |
|---|---|---|---|---|
| | | Fixing of Oligo DNA(+) | Fixing of cDNA(+) | Negative Control |
| | (1.1) | (8.2) | (9.2) | |
| Com. 6 | distilled water (0.9) | 15,600 (7.9) | 20,300 (8.6) | 0 |
| Remarks: CMC: carboxymethylcellulose PAA: polyacrylamide | | | | |

The results set forth in Table 3 indicate that the DNA micro-array prepared by the use of spotting solutions which contain a thickening agent and have an increased viscosity (Examples 7 to 9) give spots showing a CV value which is in the range of 1/2 to 1/3, as compared with the corresponding CV value of the spots given by the use of the conventional spotting solutions of Comparison Examples 5 and 6, in the fixation of not only an oligo DNA but also its cDNA. This means that the process of the invention is effective for giving well reproducible and satisfactory spots. Further, the spots of covalently bonded probe molecules produced by the use of a thickening agent according to the invention well keep their conditions even after the spots were washed with water.

The value "O" for the fluorescence strength of the negative control indicates that an essentially whole amount of the thickening agent is removed and hence that hybridization and detection accuracy are not disturbed.

[Comparison Examples 7 to 9]

The procedures of Examples 7 to 9 for the preparation of DNA micro-array were repeated except that the step for washing the spots on the glass plate with a boiling water was not done.

The produced DNA micro-array was then subjected to hybridization and the same evaluations were performed in the manner described in Examples 1 to 3.

The results are set forth in Table 4.

Table 4

| | Spotting Solution (viscosity: mPa·s) | Washing of Spots with Water | Fluorescence Strength (CV: %) | |
|---|---|---|---|---|
| | | | Oligo DNA(+) | Negative Control |
| Ex. 7 | 1 wt.% CMC (8.5) | Done | 18,600 (2.5) | 0 |
| Ex. 8 | 1 wt.% PAA (12.0) | Done | 20,200 (2.7) | 0 |
| Ex. 9 | 30 wt.% Treh. (3.5) | Done | 16,700 (3.5) | 0 |
| Com. 7 | 1 wt.% CMC (8.5) | None | 10,300 (6.6) | 300 |
| Com. 8 | 1 wt.% PAA (12.0) | None | 13,500 (5.3) | 100 |
| Com. 9 | 30 wt.% Treh. (3.5) | None | 15,800 (3.8) | 0 |
| Remarks: CMC: carboxymethylcellulose PAA: polyacrylamide | | | | |

The results set forth in Table 4 indicate that the DNA micro-array prepared by the use of spotting solutions which contain a thickening agent and have an increased viscosity but not washing the spots with water to remove the thickening agent (Comparison Examples 7 to 9) give spots showing a higher CV value, as compared with the DNA micro-array prepared according to the process of the invention. Moreover, the detection sensitivity is increased as compared with the case in which the spots are not washed with water. This appears to mean that the removal of the thickening agent from the spots is favorably affect the hybridization performed in the spots.

Further, the results of Comparison Examples 7 an 8 indicate that some polymers showing thickening property non-specifically fix thereon labeled sample DNA fragments to provide a background fluorescence strength.

## Claims

1. A process for preparing a micro-array for analysis of DNA which comprises the steps of:

   spotting onto a solid carrier in a predetermined area thereof in which a number of reactive groups are fixed an aqueous solution which contains a thickening agent and probe molecules having a group reactive with the reactive groups of the carrier to produce covalent bonding, the thickening agent being incorporated in an amount to increase viscosity of the solution to a predetermined value and the probe molecules being selected from the group consisting of nucleic acid fragments, oligonucleotides and peptide nucleic acids;
   spotting onto the solid carrier in an area other than the area in which the aqueous solution was spotted and in which the same reactive groups are present an aqueous solution which contains a thickening agent and probe molecules having a group reactive with the reactive groups of the carrier to produce covalent bonding, the thickening agent being incorporated in an amount to increase viscosity of the solution to a predetermined value and the probe molecules being selected from the group consisting of nucleic acid fragments, oligonucleotides and peptide nucleic acids;
   incubating the solid carrier having the spotted aqueous solutions on the surface to cause reaction for producing the covalent bondings; and
   washing the surface of the solid carrier with an aqueous medium to remove the thickening agent from the surface of the solid carrier.

2. The process of claim 1, wherein each of the aqueous solutions to be spotted onto the solid carrier has a viscosity of 2 to 50 mPa·s.

3. The process of claim 1, wherein the thickening agent is a water-soluble polymer.

4. The process of claim 1, wherein the reactive group of the solid carrier is a vinylsulfonyl group and the reactive group of the probe molecule is an amino group.

5. The process of claim 4, wherein the vinylsulfonyl group is provided to the solid carrier by reacting a divinylsulfone compound with a amino group which has been previously placed on the solid carrier.

6. The process of claim 1, wherein the aqueous medium for washing the solid carrier contains a surface active agent.

7. The process of claim 1, wherein each of the aqueous solutions has a viscosity essentially identical to each other.

8. A micro-array for analysis of DNA which is prepared by claim 1.

9. A process for preparing a micro-array for analysis of DNA which comprises the steps of:

   spotting onto a solid carrier in a predetermined area thereof in which a number of groups electrically chargeable in an aqueous medium are fixed an aqueous solution which contains a thickening agent and probe molecules having a group electrically chargeable in an aqueous medium to produce electrostatic bonding with the electrically chargeable groups of the carrier, the thickening agent being incorporated in an amount to increase viscosity of the solution to a predetermined value and the probe molecules being selected from the group consisting of nucleic acid fragments, oligonucleotides and peptide nucleic acids;
   spotting onto the solid carrier in an area other than the area in which the aqueous solution was spotted and in which the same electrically chargeable groups are present an aqueous solution which contains a thickening agent and probe molecules having a group electrically chargeable in an aqueous medium to produce electrostatic bonding with the electrically chargeable groups of the carrier, the thickening agent being incorporated in an amount to increase viscosity of the solution to a predetermined value and the probe molecules being selected from the group consisting of nucleic acid fragments, oligonucleotides and peptide nucleic acids;
   incubating the solid carrier having the spotted aqueous solutions on the surface to cause reaction for producing the covalent bondings; and
   washing the surface of the solid carrier with an aqueous medium to remove the thickening agent from the surface of the solid carrier.

10. The process of claim 9, wherein each of the aqueous solutions to be spotted onto the solid carrier has a viscosity of 2 to 50 mPa·s.

**11.** The process of claim 9, wherein the thickening agent is a water-soluble polymer.

**12.** The process of claim 9, wherein the electrically chargeable group of the solid carrier is an amino group and the electrically chargeable group of the probe molecule is a phosphoric acid group.

**13.** The process of claim 12, wherein the amino group is provided to the solid carrier by treating the solid carrier with an aminosilane coupling agent or a polycation compound.

**14.** The process of claim 9, wherein the aqueous medium for washing the solid carrier contains a surface active agent.

**15.** The process of claim 9, wherein each of the aqueous solutions has a viscosity essentially identical to each other.

**16.** A micro-array for analysis of DNA which is prepared by claim 1.

FIG. 1

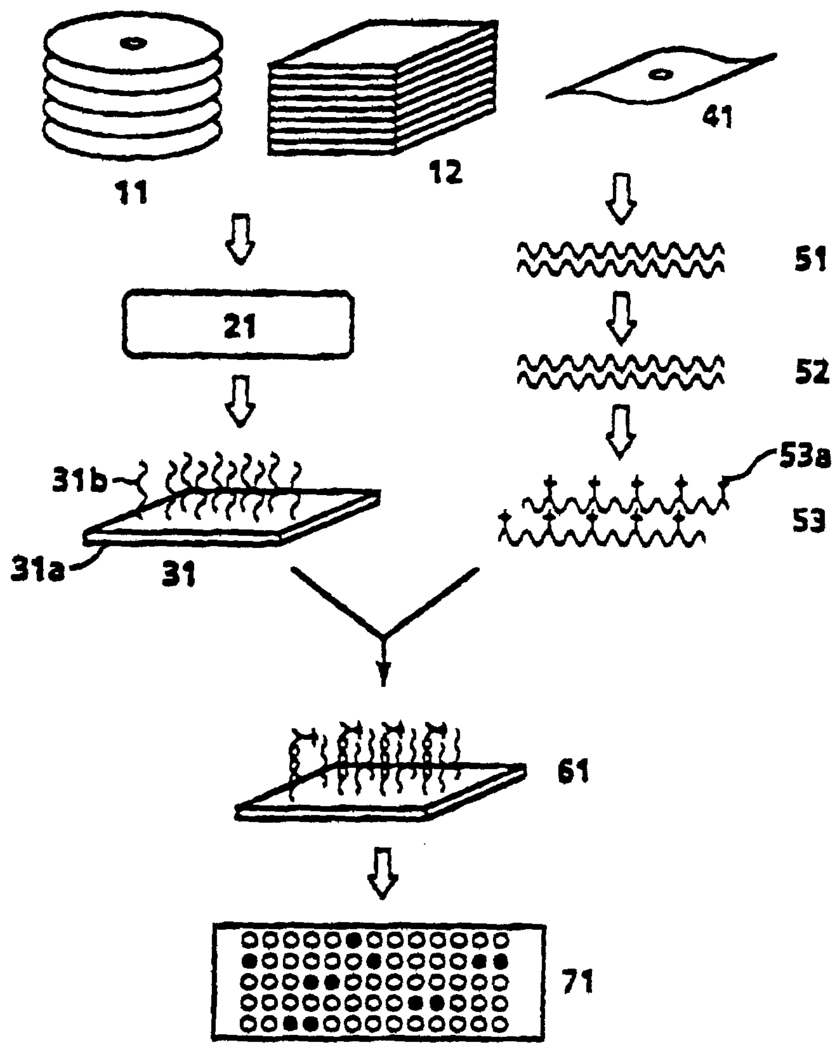

FIG. 2